(19) Europäisches Patentamt
European Patent Office
Office européen des brevets

(11) **EP 4 557 790 B1**

(12) **EUROPEAN PATENT SPECIFICATION**

(45) Date of publication and mention
of the grant of the patent:
**08.04.2026 Bulletin 2026/15**

(21) Application number: **24211730.7**

(22) Date of filing: **08.11.2024**

(51) International Patent Classification (IPC):
*H04W 12/02* (2009.01)     *G06N 3/045* (2023.01)
*G06N 3/08* (2023.01)      *G06N 3/084* (2023.01)
*G06N 20/00* (2019.01)     *H04L 41/16* (2022.01)

(52) Cooperative Patent Classification (CPC):
**H04W 12/02; G06N 3/045; G06N 3/08; G06N 3/084;
G06N 20/00;** H04L 41/16

(54) **METHOD, APPARATUS AND COMPUTER PROGRAM**

VERFAHREN, VORRICHTUNG UND COMPUTERPROGRAMM

PROCÉDÉ, APPAREIL ET PROGRAMME INFORMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.11.2023 FI 20236277**

(43) Date of publication of application:
**21.05.2025 Bulletin 2025/21**

(73) Proprietor: **Nokia Solutions and Networks Oy
02610 Espoo (FI)**

(72) Inventors:
• **MOHAMMADI, Jafar
Munich (DE)**
• **KOSKELA, Antti Herman
Espoo (FI)**
• **AGGARWAL, Chaitanya
Munich (DE)**

(74) Representative: **Nokia EPO representatives
Nokia Technologies Oy
Karakaari 7
02610 Espoo (FI)**

(56) References cited:
**CN-A- 116 911 382     US-A1- 2021 382 962
US-A1- 2022 108 213**

**Description**

TECHNICAL FIELD

Various example embodiments of this disclosure relate to a method, apparatus, system and computer program for a communications network. Some examples can be used for privacy auditing.

BACKGROUND

A communication network can be seen as a facility that enables communications between two or more communication devices, or provides communication devices access to a data network. A mobile or wireless communication network is one example of a communication network. A communication device may be provided with a service by an application server.

The patent document US 2022/108213 deals with differential privacy dataset generation using generative models.

Such communication networks operate in according with standards such as those provided by 3GPP (Third Generation Partnership Project) or ETSI (European Telecommunications Standards Institute). Examples of standards are the so-called 5G (5th Generation) standards provided by 3GPP.

SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to some examples, an apparatus comprising: means for storing a dataset comprising first data and second data for at least one User Equipment, wherein the first data has been provided to a network function and the second data has not been provided to the network function, and wherein the network function trains a machine learning model based on the first data; means for storing ground truth labels for the first data and the second data; means for sending information based on the dataset to the network function; means for receiving, from the network function, information for determining a first value of a loss function, the first value of the loss function indicating a difference between the ground truth labels of the first data and at least one predicted ground truth label of the first data determined by the network function using the machine learning model; means for receiving, from the network function, information for determining a second value of the loss function, the second value of the loss function indicating a difference between the ground truth labels of the second data and at least one predicted ground truth label of the second data determined by the network function using the machine learning model; means for determining a difference between the first value of the loss function and the second value of the loss function; means for comparing the difference to a threshold to determine whether a Differential Privacy mechanism was applied to the first data before the network function trained the machine learning model based on the first data.

According to some examples, the information for determining a first value of a loss function comprises predicted labels for the first data and the information for determining a first value of a loss function comprises predicted labels for the second data, and the apparatus comprises: means for determining the first value of the loss function based on the predicted labels for the first data and the ground truth labels for the first data; means for determining the first value of the loss function based on the predicted labels for the second data and the ground truth labels for the second data.

According to some examples, the apparatus comprises: means for sending the predicted labels for the first data to the network function, wherein the information for determining a first value of a loss function comprises predicted labels for the first data and the information for determining a first value of a loss function comprises the first value of the loss function; means for sending the predicted labels for the second data to the network function, wherein the information for determining a second value of a loss function comprises predicted labels for the first data and the information for determining a second value of the loss function comprises the second value of the loss function.

According to some examples, the dataset is stored in a first matrix, and wherein the apparatus comprises: means for swapping, using a second matrix, columns of the first matrix to provide a third matrix; means for storing the second matrix; wherein the information based on the dataset comprises the third matrix.

According to some examples, the information for determining the second value of the loss function apparatus comprises a fourth matrix, and wherein the apparatus comprises: means for using the third matrix to swap the columns of the fourth matrix to correspond to an order of the columns of the first matrix.

According to some examples, the apparatus comprises: means for sending an instruction to the network function to increase the privacy level of a Differential Privacy mechanism for the first data when it is determined that a Differential Privacy mechanism was not applied to the first data.

According to some examples, the first dataset and/or the second dataset comprises at least one of: temperature measurements from at least one user equipment during a first time period; location data for at least one user equipment during a second time period.

According to some examples, the apparatus comprises a 5G core network function.

According to some examples, the network function comprises a Network Data and Analytics Function, NWDAF.

According to an aspect, there is provided an apparatus comprising at least one processor and at least one memory storing instructions that, when executed by the at least one processor, cause the apparatus at least to: storing a dataset comprising first data and second data for at least one User Equipment, wherein the first data has been provided to a network function and the second data has not been provided to the network function, and wherein the network function trains a machine learning model based on the first data; storing ground truth labels for the first data and the second data; sending information based on the dataset to the network function; receiving, from the network function, information for determining a first value of a loss function, the first value of the loss function indicating a difference between the ground truth labels of the first data and at least one predicted ground truth label of the first data determined by the network function using the machine learning model; receiving, from the network function, information for determining a second value of the loss function, the second value of the loss function indicating a difference between the ground truth labels of the second data and at least one predicted ground truth label of the second data determined by the network function using the machine learning model; determining a difference between the first value of the loss function and the second value of the loss function; comparing the difference to a threshold to determine whether a Differential Privacy mechanism was applied to the first data before the network function trained the machine learning model based on the first data.

According to some examples, the information for determining a first value of a loss function comprises predicted labels for the first data and the information for determining a first value of a loss function comprises predicted labels for the second data, and the at least one processor may be configured to cause the apparatus to perform: determining the first value of the loss function based on the predicted labels for the first data and the ground truth labels for the first data; determining the first value of the loss function based on the predicted labels for the second data and the ground truth labels for the second data.

According to some examples, the at least one processor may be configured to cause the apparatus to perform: sending the predicted labels for the first data to the network function, wherein the information for determining a first value of a loss function comprises predicted labels for the first data and the information for determining a first value of a loss function comprises the first value of the loss function; sending the predicted labels for the second data to the network function, wherein the information for determining a second value of a loss function comprises predicted labels for the first data and the information for determining a second value of the loss function comprises the second value of the loss function.

According to some examples, the dataset is stored in a first matrix, and the at least one processor may be configured to cause the apparatus to perform: swapping, using a second matrix, columns of the first matrix to provide a third matrix; storing the second matrix; wherein the information based on the dataset comprises the third matrix.

According to some examples, the information for determining the second value of the loss function apparatus comprises a fourth matrix, and the at least one processor may be configured to cause the apparatus to perform: using the third matrix to swap the columns of the fourth matrix to correspond to an order of the columns of the first matrix.

According to some examples, the at least one processor may be configured to cause the apparatus to perform: sending an instruction to the network function to increase the privacy level of a Differential Privacy mechanism for the first data when it is determined that a Differential Privacy mechanism was not applied to the first data.

According to some examples, the first dataset and/or the second dataset comprises at least one of: temperature measurements from at least one user equipment during a first time period; location data for at least one user equipment during a second time period.

According to some examples, the apparatus comprises a 5G core network function.

According to some examples, the network function comprises a Network Data and Analytics Function, NWDAF.

According to an aspect, there is provided a method comprising: storing a dataset comprising first data and second data for at least one User Equipment, wherein the first data has been provided to a network function and the second data has not been provided to the network function, and wherein the network function trains a machine learning model based on the first data; storing ground truth labels for the first data and the second data; sending information based on the dataset to the network function; receiving, from the network function, information for determining a first value of a loss function, the first value of the loss function indicating a difference between the ground truth labels of the first data and at least one predicted ground truth label of the first data determined by the network function using the machine learning model; receiving, from the network function, information for determining a second value of the loss function, the second value of the loss function indicating a difference between the ground truth labels of the second data and at least one predicted ground truth label of the second data determined by the network function using the machine learning model; determining a difference between the first value of the loss function and the second value of the loss function; comparing the difference to a threshold to determine whether a Differential Privacy mechanism was applied to the first data before the network function trained the machine learning model based on the first data.

According to some examples, the information for determining a first value of a loss function comprises predicted labels for the first data and the information for determining a first value of a loss function comprises predicted labels for the second data, and the method comprises: determining the first value of the loss function based on the predicted labels for the first data and the ground truth labels for the first data; determining the first value of the loss function based on the predicted labels for the second data and the ground truth labels for the second data.

According to some examples, the method comprises: sending the predicted labels for the first data to the network function, wherein the information for determining a first value of a loss function comprises predicted labels for the first data and the information for determining a first value of a loss function comprises the first value of the loss function; sending the predicted labels for the second data to the network function, wherein the information for determining a second value of a loss function comprises predicted labels for the first data and the information for determining a second value of the loss function comprises the second value of the loss function.

According to some examples, the dataset is stored in a first matrix, and the method comprises: swapping, using a second matrix, columns of the first matrix to provide a third matrix; storing the second matrix; wherein the information based on the dataset comprises the third matrix.

According to some examples, the information for determining the second value of the loss function apparatus comprises a fourth matrix, and the method comprises: using the third matrix to swap the columns of the fourth matrix to correspond to an order of the columns of the first matrix.

According to some examples, the method comprises: sending an instruction to the network function to increase the privacy level of a Differential Privacy mechanism for the first data when it is determined that a Differential Privacy mechanism was not applied to the first data.

According to some examples, the first dataset and/or the second dataset comprises at least one of: temperature measurements from at least one user equipment during a first time period; location data for at least one user equipment during a second time period.

According to some examples, the method is performed by a 5G core network function.

According to some examples, the network function comprises a Network Data and Analytics Function, NWDAF.

According to an aspect, there is provided a computer readable medium comprising instructions which, when executed by an apparatus, cause the apparatus to perform at least the following: storing a dataset comprising first data and second data for at least one User Equipment, wherein the first data has been provided to a network function and the second data has not been provided to the network function, and wherein the network function trains a machine learning model based on the first data; storing ground truth labels for the first data and the second data; sending information based on the dataset to the network function; receiving, from the network function, information for determining a first value of a loss function, the first value of the loss function indicating a difference between the ground truth labels of the first data and at least one predicted ground truth label of the first data determined by the network function using the machine learning model; receiving, from the network function, information for determining a second value of the loss function, the second value of the loss function indicating a difference between the ground truth labels of the second data and at least one predicted ground truth label of the second data determined by the network function using the machine learning model; determining a difference between the first value of the loss function and the second value of the loss function; comparing the difference to a threshold to determine whether a Differential Privacy mechanism was applied to the first data before the network function trained the machine learning model based on the first data.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

DESCRIPTION OF FIGURES

Some example embodiments will now be described, by way of non-limiting and illustrative example only, with reference to the accompanying Figures in which:

FIG. 1 shows a representation of a 5th generation communication system;
FIG. 2 shows a first example algorithm;
FIG. 3 shows a second example algorithm;
FIG. 4 shows results of an example simulation;
FIG. 5 shows an example method;
FIG. 6 shows a representation of an apparatus for the communication system of FIG. 1 according to some example embodiments;

FIG. 7 shows a representation of an apparatus according to some example embodiments; and
FIG. 8 shows a schematic representation of a non-volatile memory medium storing instructions which when executed by a processor allow a processor to perform one or more of the steps of the methods disclosed herein.

## DETAILED DESCRIPTION

In communications networks, the network may be requested to maintain a certain level of privacy of an identity of a User Equipment (UE). The request may be sent from the UE, for example, or could be requested by another entity in the network. The request may be to preserve the privacy of the UE, at least partially, using Privacy Enhancing Technologies (PET) or by anonymizing data from the UE. Some examples described herein provide a method, system and computer program for verifying whether the privacy request for the UE is respected in the network. For example, the network may respect the request by receiving the privacy request, processing the privacy request and successful implementing the condition(s) in the privacy request.

After verifying whether the privacy request has been respected or not, the verification results can be provided to the UE. In some examples, the verification results can be provided to other network entities. This can be useful in communications networks (e.g., 5G, 6G networks) comprising software or components from different operators, and an inter-operator UE privacy verification is required (e.g., so that one operator can determine that another operator is correctly respecting UE privacy requests).

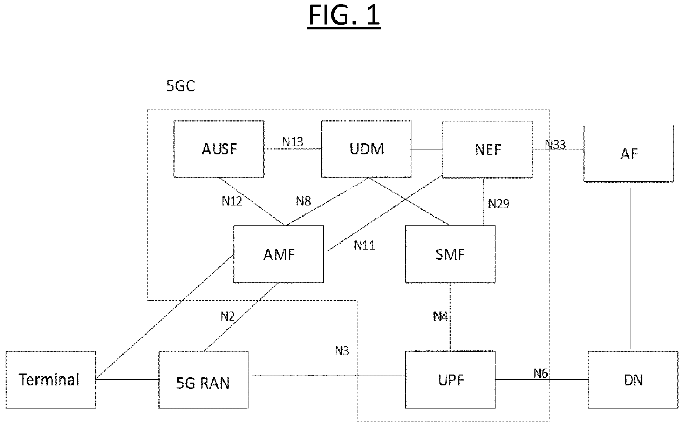

In the following various example embodiments are explained with reference to communication devices capable of communication with a communication system. Before explaining in detail the embodiments of the methods and apparatuses of the present disclosure, a $5^{th}$ generation communication system (5GS), an access network and a core network (5GC) thereof, and communication devices are briefly explained with reference to FIG. 1.

FIG 1 shows a schematic representation of a 5G communication system (5GS). The 5GS may comprise a user equipment (UE), an access network such as a 5G radio access network (5G-RAN) or next generation radio access network (NG-RAN), a 5G core network (5GC), and one or more application functions. An application function may be deployed in the 5GS as trusted application function or may be deployed or host on one or more application servers of the data network. Such application functions are untrusted application functions. The 5GS connects the UE to a data network the access network and the 5GC (e.g., a UPF of the 5GC).

The 5G-RAN may comprise one or more radio access nodes, such as gNodeB (GNB). A gNB may include one or more gNodeB (GNB) distributed units connected to one or more gNodeB (GNB) centralized units.

The 5GC may comprise the following network functions: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF), and a user plane function (UPF). FIG. 1 also shows the various interfaces (N1, N2 etc.) that may be implemented between the various elements of the system.

Some examples consider federated training of ML models with differential privacy (DP). Commonly, in DP Federated Learning (FL) methods, noise is added (with a certain tractable distribution, e.g. Gaussian) to the model updates to enhance privacy.

Consider a DP version of the gradient descent algorithm. DP gradient descent (DP-GD) differs from GD such that sample-wise gradients of a random mini-batch are clipped to have $L_2$-norm at most $C$ (a pre-defined constant) and normally distributed noise with variance $\sigma^2$ is added to the sum of gradients. One iteration of the algorithm is given by:

$$\theta_{j+1} = \theta_j - \eta \cdot \frac{1}{N}\left(\sum_{x \in X} \nabla f(x, \theta_j + Z_j)\right) \qquad (1.1)$$

where $\theta$ stands for the model parameter represented as a d-dimensional vector, each element of the noise vector $Z_j$ is distributed as $\mathcal{N}(0, C^2\sigma^2)$, and $\eta$ denotes the learning and N denotes the total number of data points.

The DP mechanism that can be analysed here is the total noisy gradient:

$$M(X) := \sum_{x \in X} \nabla f(x, \theta_j + Z_j)$$

The $(\varepsilon, \delta)$-DP guarantee (Dwork, C., McSherry, F., Nissim, K., & Smith, A. (2006). Calibrating noise to sensitivity in private data analysis. In Theory of Cryptography: Third Theory of Cryptography Conference, TCC 2006, New York, NY, USA, March 4-7, 2006. Proceedings 3 (pp. 265-284). Springer Berlin Heidelberg) is obtained by, e.g., an analytic bound

$$\varepsilon = \frac{\sqrt{1.25 log \frac{2}{\delta}}}{\sigma} \qquad\qquad (1.2)$$

**In general,** in DP methods the total privacy guarantees depend on the sensitivity of the local function $f_i(X_i)$ and on the total amount of added noise variance. $\delta$ can be a fixed value. The value of $\delta$ can be small (for example, 1/n, where N is the total size of the dataset). The claie of $\varepsilon$ describes the level of privacy protection, and is determined by various parameters (here by the noise level only since delta is fixed). However, without some rather computationally and architecturally demanding procedures, the only participant who knows whether user $i$ added its share of noise is the user $i$. Suppose only $m$ users ($m < n$) actually add the noise. Then the model will have epsilon that is $\sqrt{\frac{n}{m}}$ times higher than what is promised by the server providing the DP mechanism.

Consider an example where there is a collusion attack between n - 1 users and the server, such that $n$ - 1 users would send some vectors known to the server which completely reveal the noisy message to the $n$th user, i.e., the message $y_n$ would then have ($\varepsilon$, $\delta$)-DP protection for $\varepsilon$ given by

$$\varepsilon = \frac{\sqrt{1.25 log \frac{2}{\delta}}}{\sigma/\sqrt{n}} = \sqrt{n}\frac{\sqrt{1.25 log \frac{2}{\delta}}}{\sigma}$$

**which is** $\sqrt{n}$ times higher than the $\varepsilon$ that would be promised by the server.

Examples perform auditing by determining whether a machine learning model used in the network has been trained using training data that respects a privacy request for a UE identity. This can be performed by comparing loss values or prediction accuracy measurements for the trained machine learning model when using the training data and when using test data. The test data has not been processed using PET or to anonymise the test data. When the training data has not been processed using PET (e.g., to anonymise the data or to remove at least some user identifiable data), when the trained ML model performs predictions using the training data and the test data, the trained ML model should perform better on the training data than on the test data. Threshold/statistical testing schemes can therefore analyse how much better the trained ML model performs making predictions on the training data than on the test data, to determine whether the training data has been processed using PET as requested.

Examples related to auditing privacy. This can be performed by a network function, which is described herein as a Privacy Auditing Network Function (PANF). In some examples, the PANF is a core network function.

The PANF can be used to detect the presence of a DP mechanism in training a dataset at an AI/ML Network Function (NF) /Application Function (AF), e.g., Network Data Analytics Function (NWDAF). In the method described herein, the PANF does not require heaving access to the trained network's weights, such that the AI/ML NF/AF can be treated as a blackbox. This is useful in situations where the trained NN is private, such that it may not be feasible for some parties to gain access to the trained NN (the trained NN could be an industry secret, for example).

The **method** requires the following datasets to be provided by the data owners:

1) A set of un-processed (raw) training dataset, which is given to the AI/ML trainer NF.
2) A set of un-processed (raw) test dataset, which has not been given to the AI/ML trainer.

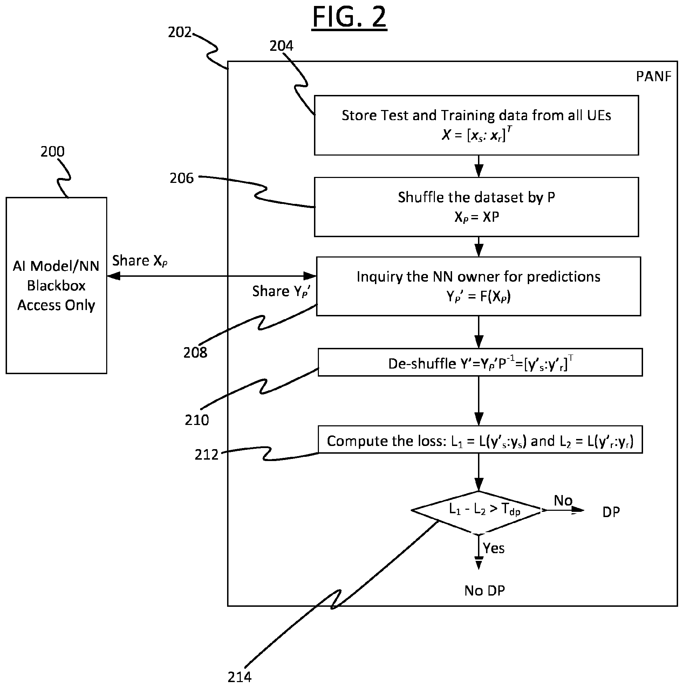

An example algorithm that can be performed at the PANF is shown in FIG. 2. Operations performed by PANF 202 can be used to determine whether DP has been used on data used to train an AI model (e.g., a Neural Network (NN)) at NF/AF 200 (e.g., an NWDAF).

At 204, PANF 202 stores raw training data and raw test data in a raw dataset $X = [x_s: x_r]$, where $x_s$ comprises the training data and $x_r$ comprises the test data. The raw training dataset comprises data given to the AI/ML trainer NF 200. The raw test data comprises data that has not been given to the AI/ML trainer. The raw training data and raw test data may be collected from a group of UEs to determine an AI/ML model for making predictions for the group of UEs. PANF 202 also has access to labels $Y = [y_s; y_r]$ for the raw dataset. These labels $Y$ may be considered ground truth labels.

At 206, the raw dataset $X = [x_s: x_r]^T$ is shuffled at random. Data from different UEs is shuffled at random. Shuffling comprises swapping columns of matrix X at random. The shuffling key(s) can be stored local at 202. For example, the shuffled raw data may comprise $X_p = XP$, where $P$ is a shuffling matrix.

At 208, PANF 202 sends $X_p$ to network function 200 where the trained AI model/NN is stored. At 208, PANF 202 requests predictions from the trained AI model to predict labels $Y_p' = F(X_p)$. As the data has been shuffled, it is difficult for network function 200 to determine which UE is being tested/audited. This can prevent data tampering by network function 200.

At 210, PANF 202 uses the shuffling key(s) stored at PANF 202 to de-shuffle the output $Y_p'$ and re-order the output in the same order as $X$. This can be performed using the following operation: [All_UE_Training; All_UE_Test] data: $Y' = Y_p'$ $P^{-1} = [y'_s: y'_r]^T$.

At 210, PANF 202 can compute the loss function of the predictions $Y'$ and the corresponding ground truth labels $Y$ to determine a value of a loss function for the training data, $L_1$, and a value of a loss function for the test data, $L_2$. This can be performed using the following operations.

    a. Loss_All_UE_Training: $L_1 = L(y'_s, y_s)$
    b. Loss_All_UE_Test $L_2 = L(y'_r, y_r)$

At 212, PANF 202 determines whether $L_1 - L_2 > T_{dp}$, where $T_{dp}$ is a threshold value for determining whether DP has been used for training the AI model at NF/AF 200. **If** L_1 - L_2 > $T_{dp}$: No DP has been used. **Else:** DP has been used.

The threshold $T_{dp}$ could be empirically achieved by PANF 202 by trying with different number of datasets, NN outputs, and by changing the privacy level ($\varepsilon, \delta$). The threshold $T_{dp}$ can be determined experimentally.

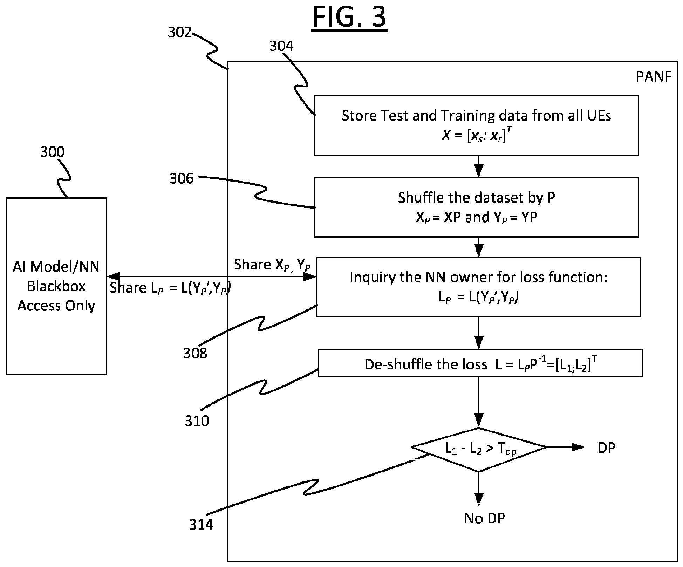

An example algorithm that can be performed at the PANF is shown in FIG. 3. The method of FIG. 3 is similar to the method of FIG. 2, except that the loss values are determined at NF/AF 300 (e.g., a NWDAF). Operations performed by PANF 302 can be used to determine whether DP has been used on data used to train an AI model (e.g., a Neural Network (NN)) at NF/AF 300 (e.g., an NWDAF).

At 304, PANF 302 stores raw training data and raw test data in a raw dataset $X = [x_s: x_r]^T$, where $x_s$ comprises the training data and $x_r$ comprises the training data. The raw training dataset comprises data given to the AI/ML trainer NF 300. The raw test data comprises data that has not been given to the AI/ML trainer. The raw training data and raw test data may be collected from a group of UEs to determine an AI/ML model for making predictions for the group of UEs. PANF 302 also has access to labels $Y = [y_s; y_r]^T$ for the raw dataset. These labels $Y$ may be considered ground truth labels.

At 306, the raw dataset $X = [x_s: x_r]^T$ is shuffled at random. Data from different UEs is shuffled at random. Shuffling comprises swapping columns of matrix X at random. The shuffling key(s) can be stored local at 302. For example, the shuffled raw data may comprise $X_p = XP$, where $P$ is a shuffling matrix.

At 306, the labels $Y$ are also shuffled using the same shuffling key(s) ($P$). Shuffling comprises swapping columns of matrix $Y$ at random. For example, the shuffled raw data may comprise $Y_p = YP$, where $P$ is a shuffling matrix.

At 308, PANF 302 sends $X_p$ and $Y_p$ and to network function 300 where the trained AI model/NN is stored. At 308, PANF 302 requests values for a loss function to be provided from the trained AI model to predict $L_p = L(Y'_p, Y_p)$. As the data has been shuffled, it is difficult for network function 300 to determine which UE is being tested/audited. This can prevent data tampering by network function 300.

At 310, PANF 302 uses the shuffling key(s) stored at PANF 302 to de-shuffle the output $L_p$ and re-order the output in the same order as $X$. This can be performed using the following operation: Use the shuffling keys to de-shuffle the output according to and re-order them too: [All_UE_Training; All_UE_Test] data: $L = L_p P^{-1} = [L_1 : L_2]^T$

At 314, PANF 302 determines whether $L_1 - L_2 > T_{dp}$, where $T_{dp}$ is a threshold value for determining whether DP has been used for training the AI model at NF/AF 300. If L_1 - L_2 > $T_{dp}$: No DP has been used. Else: DP has been used.

The threshold $T_{dp}$ could be empirically achieved by PANF 302 by trying with different number of datasets, NN outputs, and by changing the privacy level ($\varepsilon, \delta$). The threshold $T_{dp}$ can be determined experimentally.

An explanation is given below for the reasoning of using difference between loss values for the raw training data and for raw test data as an indicator that DP has been used for an AI model.

Suppose there is a deterministic discrete-valued score function $l$ which depends on the model parameters and a single data element $x$. Suppose the model parameters are output of training algorithm $M(D)$ which takes as an input dataset $D$. Denote $D_+$ the dataset which includes $x$ and $D_-$ the dataset where $x$ is replaced by another data element.

By the post-processing property of DP, we have that

$$\Pr(l(M(D_+), x) = k) \leq e^\epsilon \Pr(l(M(D_-), x) = k) + \delta$$

where ($\varepsilon, \delta$) gives DP guarantees for $M$ and "Pr" is probability.

Denote by $D$ the actual training dataset and denote by $A_{train}$ and $A_{test}$ the auditing training and test sets, respectively. I.e., $A_{train}$ is part of $D$ and $A_{test}$ is not. Support both have $m$ data elements. The DP property above indicates that the distributions

$$X = l(M(D), x) \quad x \sim A_{train},$$

and

$$Y = l(M(D), x) \quad x \sim A_{test}$$

should be (ε, δ)-close to each other. Moreover, the means

$$\hat{X} = \frac{1}{m} \sum_{x \in A_{train}}^{\square} l(M(D), x)$$

and

$$\hat{Y} = \frac{1}{m} \sum_{x \in A_{test}}^{\square} l(M(D), x)$$

are approximately normally distributed by the law of large numbers. We know that the (ε, δ)-distance between two Gaussian distributions with equal variances depend only on their distance divided by the standard deviation. Thus, we take as a heuristic indicator the quantity

$$Indicator = \frac{\left|\hat{X} - \hat{Y}\right|}{\sqrt{Var(X) + Var(Y)}}$$

This value should actually be directly related to the lower bound for the (ε, δ)-guarantees of the mechanism $M$. The larger the Indicator-value, the weaker the privacy guarantees of $M$ should be.

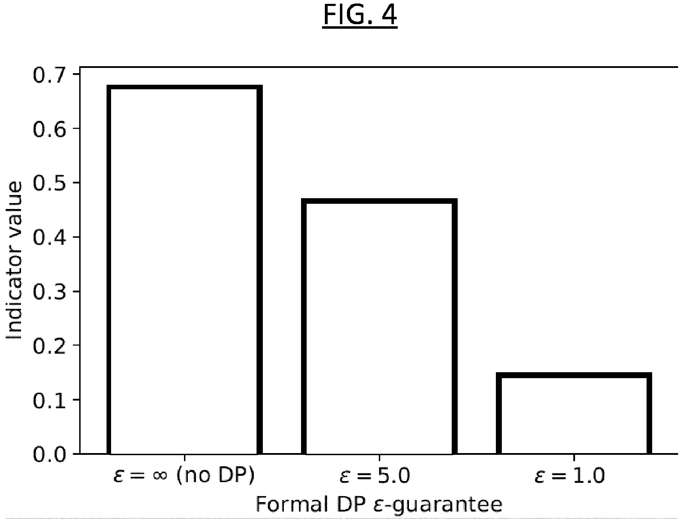

Results of simulations are shown in FIG. 4.

Consider a classification problem where train the last layer (fully connected layer) of a Resnet-18 network (He, K., Zhang, X., Ren, S., & Sun, J. (2016). Deep residual learning for image recognition. In Proceedings of the IEEE conference on computer vision and pattern recognition (pp. 770-778).) that is pre-trained with a subset of Imagenet (Deng, J., Dong, W., Socher, R., Li, L. J., Li, K., & Fei-Fei, L. (2009, June). Imagenet: A large-scale hierarchical image database. In 2009 IEEE conference on computer vision and pattern recognition (pp. 248-255). IEEE). The weights are obtained from the Torchvision library. Consider using the training split (50000 samples) of CIFAR-10 image dataset.

THE layer is trained using DP-Stochastic Gradient Descent (DP-SGD), with batch size 1000, and with varied noise level $\sigma$ such that different levels of privacy $\varepsilon$ are provided.

1000 samples from the training data are randomly taken to be the "auditing train set" and 1000 samples are only taken to the to be the "auditing test set". The "auditing train set" is part of the training data for the model, the "auditing test set" is excluded. We measure the average loss over these two auditing sets along the training iteration and compute the Indicator described above.

With three different values of the noise scale $\sigma$, the following is observed. Three different noise scales $\sigma$, to obtain three different formal $\varepsilon$-guarantees (for $\delta = 10^{-5}$) after 100 epochs of training. Here $\varepsilon = 1.0$ means a strong level of privacy protection and $\varepsilon = 5.0$ an intermediate level of privacy protection. It can be inferred whether there is DP by observing the value of the indicator. We make a threshold based on running experiments using similar datasets. E.g., here we could set 0.5 as a threshold in case the aggregator had promised intermediate DP guarantees.

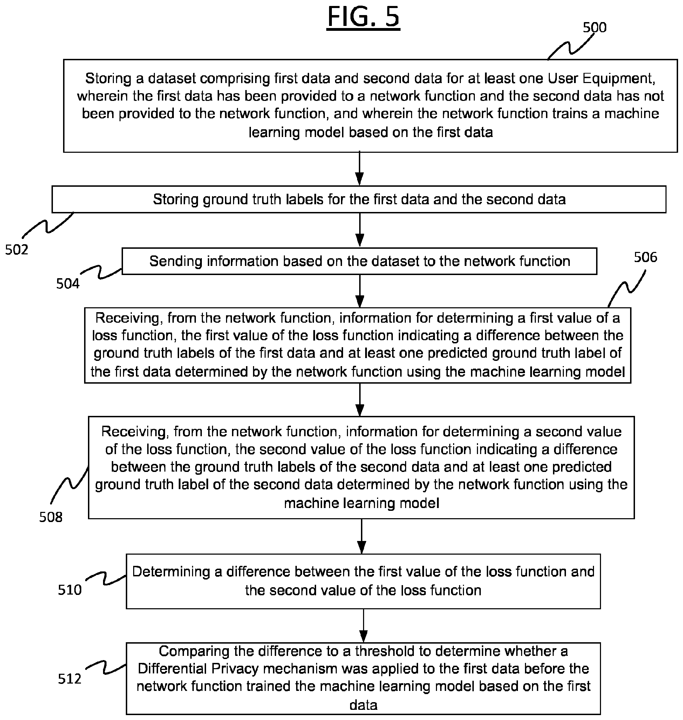

FIG. 5 shows an example method flow. The method may be performed, for example, by a network function (e.g., PANF 202, 302). The method may be performed by a core network function.

At 500, the method comprises storing a dataset comprising first data and second data for at least one User Equipment, wherein the first data has been provided to a network function and the second data has not been provided to the network function, and wherein the network function trains a machine learning model based on the first data.

At 502, the method comprises storing ground truth labels for the first data and the second data.

At 504, the method comprises sending information based on the dataset to the network function.

At 506, the method comprises receiving from the network function, information for determining a first value of a loss function, the first value of the loss function indicating a difference between the ground truth labels of the first data and at least one predicted ground truth label of the first data determined by the network function using the machine learning model.

At 508, the method comprises receiving from the network function, information for determining a second value of the loss function, the second value of the loss function indicating a difference between the ground truth labels of the second data and at least one predicted ground truth label of the second data determined by the network function using the machine learning model.

At 510, the method comprises determining a difference between the first value of the loss function and the second value of the loss function.

At 512, the method comprises comparing the difference to a threshold to determine whether a Differential Privacy mechanism was applied to the first data before the network function trained the machine learning model based on the first data.

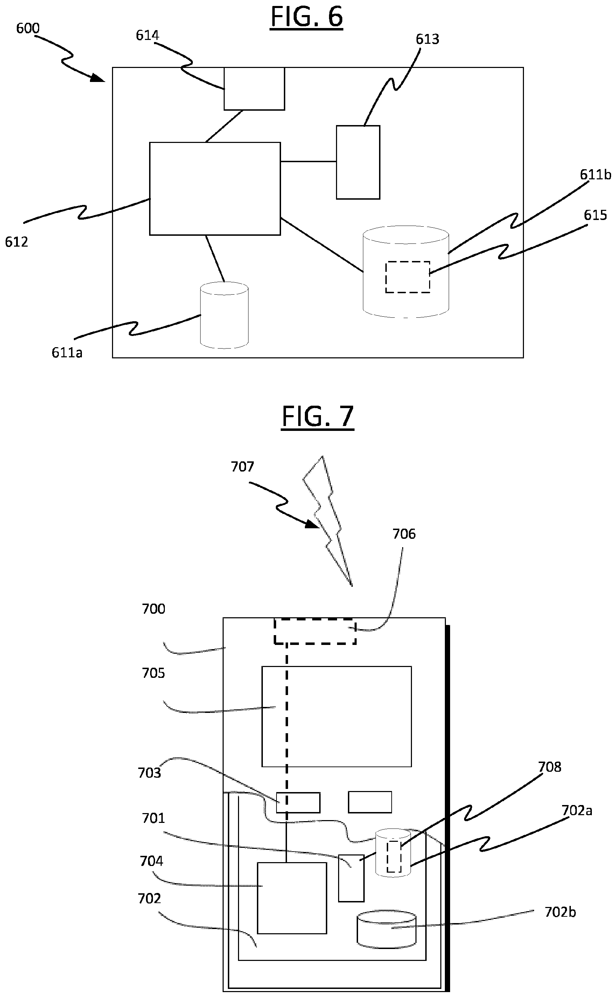

FIG. 6 illustrates an example of an apparatus 600 for one or more network functions illustrated in FIG. 1-5. The apparatus 600 may comprise at least one random access memory (RAM) 611a, at least on read only memory (ROM) 611b, at least one processor 612, 613 and a network interface 614. The at least one processor 612, 613 may be coupled to the RAM 611a and the ROM 611b. The at least one processor 612, 613 may be configured to execute an appropriate software code 615. Execution of the software code 615 may for example may cause the apparatus to perform operations for one or more network functions. The software code 615 may be stored in the ROM 611b. The apparatus 600 may be interconnected with another apparatus 600 for controlling other network functions of the 5GC. In some embodiments, one or more network functions of the 5GC is deployed or hosted on an apparatus 600. In alternative embodiments, two or more functions of the 5GC may share an apparatus 600.

FIG. 7 illustrates an example of a communication device 700, such as the terminal illustrated on FIG. 1. The communication device 700 may be provided by any device capable of sending and receiving radio signals. Non-limiting examples of a communication device 900 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 900 may comprise a transceiver for transmitting and/or receiving, for example, wireless signals carrying communications, for example radio signals. The communications may be one or more of voice, electronic mail (email), text messages, multimedia data, machine data and so on.

The communication device 700 may receive wireless signals (e.g., radio signals) over an air or radio interface 707 via appropriate apparatus for receiving and may transmit wireless signals via appropriate apparatus for transmitting radio signals. In FIG. 7 transceiver is designated schematically by block 706. The transceiver 706 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 700 may be provided with at least one processor 701, at least one memory ROM 702a, at least one RAM 702b and other possible components 703 for use in software and hardware aided execution of tasks it is designed to perform, including control of access to and communications with access networks (e.g., the 5G-RAN or NG-RAN illustrated in FIG. 1) and other communication devices. The at least one processor 701 is coupled to the RAM 702b and the ROM 702a. The at least one processor 701 may be configured to execute an appropriate software code 708. The software code 708 may for example allow to perform one or more operations of the communication device. The software code 708 may be stored in the ROM 702a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 704. The communication device 700 may optionally have a user interface such as key pad 705, touch sensitive screen or pad, combinations thereof or the like. Optionally one or more of a display, a speaker and a microphone may be provided depending on the type of communication device.

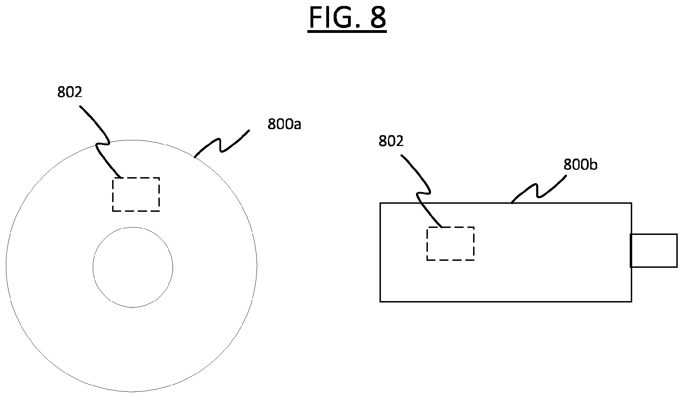

FIG. 8 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of any method flow described herein.

It is understood that references in the above to various network functions (e.g., to an AMF, an SMF, TNF etc.) may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of the term "means" herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

**Claims**

1. An apparatus comprising:

   means for storing (500) a dataset comprising first data and second data for at least one User Equipment, wherein the first data has been provided to a network function and the second data has not been provided to the network function during a training of a machine learning model, and wherein the network function trains the machine learning model based on the first data;
   means for storing (502) ground truth labels for the first data and the second data;
   means for sending (504) a representation of the dataset to the network function;
   means for receiving (506), from the network function, information for determining a first value of a loss function, the first value of the loss function indicating a difference between the ground truth labels of the first data and at least one predicted ground truth label of the first data determined by the network function using the machine learning model;
   means for receiving (508), from the network function, information for determining a second value of the loss function, the second value of the loss function indicating a difference between the ground truth labels of the second data and at least one predicted ground truth label of the second data determined by the network function using the machine learning model;
   means for determining (510) a difference between the first value of the loss function and the second value of the loss function;
   means for comparing (512) the difference to a threshold to determine whether a Differential Privacy mechanism was applied to the first data before the network function trained the machine learning model based on the first data.

2. The apparatus according to claim 1, wherein the information for determining the first value of the loss function comprises the predicted labels for the first data and the predicted labels for the second data, and wherein the apparatus comprises:

   means for determining the first value of the loss function based on the predicted labels for the first data and the ground truth labels for the first data;
   means for determining the first value of the loss function based on the predicted labels for the second data and the ground truth labels for the second data.

3. The apparatus according to claim 1, wherein the apparatus comprises:

   means for sending the predicted labels for the first data to the network function, wherein the information for determining the first value of the loss function comprises the predicted labels for the first data and the first value of the loss function;
   means for sending the predicted labels for the second data to the network function, wherein the information for determining the second value of the loss function comprises the predicted labels for the first data and the second value of the loss function.

4. An apparatus according to any preceding claim, wherein the dataset is stored in a first matrix, and wherein the apparatus comprises:

means for swapping, using a second matrix, columns of the first matrix to provide a third matrix;
means for storing the second matrix;
wherein the representation of the dataset comprises the third matrix.

5.  An apparatus according to claim 4, wherein the information for determining the second value of the loss function apparatus comprises a fourth matrix, and wherein the apparatus comprises:
means for using the third matrix to swap the columns of the fourth matrix to correspond to an order of the columns of the first matrix.

6.  An apparatus according to any preceding claim, wherein the apparatus comprises:
means for sending an instruction to the network function to increase the privacy level of a Differential Privacy mechanism for the first data when it is determined that a Differential Privacy mechanism was not applied to the first data.

7.  An apparatus according to any preceding claim, wherein the first dataset and/or the second dataset comprises at least one of:

> temperature measurements from at least one user equipment during a first time period;
> location data for at least one user equipment during a second time period.

8.  An apparatus according to any preceding claim, wherein the apparatus comprises a 5G core network function.

9.  An apparatus according to any preceding claim, wherein the network function comprises a Network Data and Analytics Function, NWDAF.

10. A method comprising:

> storing (500) a dataset comprising first data and second data for at least one User Equipment, wherein the first data has been provided to a network function and the second data has not been provided to the network function during a training of a machine learning model, and wherein the network function trains the machine learning model based on the first data;
> storing (502) ground truth labels for the first data and the second data;
> sending (504) a representation of the dataset to the network function;
> receiving (506), from the network function, information for determining a first value of a loss function, the first value of the loss function indicating a difference between the ground truth labels of the first data and at least one predicted ground truth label of the first data determined by the network function using the machine learning model;
> receiving (508), from the network function, information for determining a second value of the loss function, the second value of the loss function indicating a difference between the ground truth labels of the second data and at least one predicted ground truth label of the second data determined by the network function using the machine learning model;
> determining (510) a difference between the first value of the loss function and the second value of the loss function; and
> comparing (512) the difference to a threshold to determine whether a Differential Privacy mechanism was applied to the first data before the network function trained the machine learning model based on the first data.

11. The method according to claim 10, wherein the information for determining the first value of the loss function comprises the predicted labels for the first data the predicted labels for the second data, and wherein the method comprises:

> determining the first value of the loss function based on the predicted labels for the first data and the ground truth labels for the first data;
> determining the first value of the loss function based on the predicted labels for the second data and the ground truth labels for the second data.

12. The method according to claim 10, wherein the method comprises:

> sending the predicted labels for the first data to the network function, wherein the information for determining the first value of the loss function comprises the predicted labels for the first data and the first value of the loss function;

sending the predicted labels for the second data to the network function, wherein the information for determining the second value of the loss function comprises the predicted labels for the first data and the second value of the loss function.

13. The method according to any of claims 10 to 12, wherein the dataset is stored in a first matrix, and wherein the method comprises:

swapping, using a second matrix, columns of the first matrix to provide a third matrix;
storing the second matrix;
wherein the representation of the dataset comprises the third matrix.

14. The method according to claim 13, wherein the information for determining the second value of the loss function apparatus comprises a fourth matrix, and wherein the method comprises: using the third matrix to swap the columns of the fourth matrix to correspond to an order of the columns of the first matrix.

15. A computer program comprising instructions stored thereon for performing at least the following:

storing (500) a dataset comprising first data and second data for at least one User Equipment, wherein the first data has been provided to a network function and the second data has not been provided to the network function, and wherein the network function trains a machine learning model based on the first data;
storing (502) ground truth labels for the first data and the second data;
sending (504) a representation of the dataset to the network function;
receiving (506), from the network function, information for determining a first value of a loss function, the first value of the loss function indicating a difference between the ground truth labels of the first data and at least one predicted ground truth label of the first data determined by the network function using the machine learning model;
receiving (508), from the network function, information for determining a second value of the loss function, the second value of the loss function indicating a difference between the ground truth labels of the second data and at least one predicted ground truth label of the second data determined by the network function using the machine learning model;
determining (510) a difference between the first value of the loss function and the second value of the loss function; and
comparing (512) the difference to a threshold to determine whether a Differential Privacy mechanism was applied to the first data before the network function trained the machine learning model based on the first data.

**Patentansprüche**

1. Eine Vorrichtung, umfassend:

Mittel zum Speichern (500) eines Datensatzes, der erste Daten und zweite Daten für mindestens ein Benutzergerät umfasst, wobei die ersten Daten einer Netzwerkfunktion bereitgestellt wurden und die zweiten Daten der Netzwerkfunktion während eines Trainings eines maschinellen Lernmodells nicht bereitgestellt wurden, und wobei die Netzwerkfunktion das maschinelle Lernmodell auf der Grundlage der ersten Daten trainiert;
Mittel zum Speichern (502) von Ground-Truth-Labels für die ersten Daten und die zweiten Daten;
Mittel zum Senden (504) einer Darstellung des Datensatzes an die Netzwerkfunktion;
Mittel zum Empfangen (506) von der Netzwerkfunktion von Informationen zur Bestimmung eines ersten Wertes einer Verlustfunktion, wobei der erste Wert der Verlustfunktion eine Differenz zwischen den Ground-Truth-Labels der ersten Daten und mindestens einem vorhergesagten Ground-Truth-Label der ersten Daten anzeigt, das von der Netzwerkfunktion unter Verwendung des maschinellen Lernmodells bestimmt wird;
Mittel zum Empfangen (508) von der Netzwerkfunktion von Informationen zur Bestimmung eines zweiten Wertes der Verlustfunktion, wobei der zweite Wert der Verlustfunktion eine Differenz zwischen den Ground-Truth-Labels der zweiten Daten und mindestens einem vorhergesagten Ground-Truth-Label der zweiten Daten anzeigt, das von der Netzwerkfunktion unter Verwendung des maschinellen Lernmodells bestimmt wird;
Mittel zum Bestimmen (510) einer Differenz zwischen dem ersten Wert der Verlustfunktion und dem zweiten Wert der Verlustfunktion;
Mittel zum Vergleichen (512) der Differenz mit einem Schwellenwert, um zu bestimmen, ob ein Differential-Privacy-Mechanismus auf die ersten Daten angewendet wurde, bevor die Netzwerkfunktion das maschinelle Lernmodell auf der Grundlage der ersten Daten trainiert hat.

2. Vorrichtung nach Anspruch 1, wobei die Informationen zur Bestimmung des ersten Wertes der Verlustfunktion die vorhergesagten Labels für die ersten Daten und die vorhergesagten Labels für die zweiten Daten umfassen, und wobei die Vorrichtung umfasst:

Mittel zum Bestimmen des ersten Wertes der Verlustfunktion auf der Grundlage der vorhergesagten Labels für die ersten Daten und der Ground-Truth-Labels für die ersten Daten;
Mittel zum Bestimmen des ersten Wertes der Verlustfunktion auf der Grundlage der vorhergesagten Labels für die zweiten Daten und der Ground-Truth-Labels für die zweiten Daten.

3. Vorrichtung nach Anspruch 1, wobei die Vorrichtung umfasst:

Mittel zum Senden der vorhergesagten Labels für die ersten Daten an die Netzwerkfunktion, wobei die Informationen zur Bestimmung des ersten Wertes der Verlustfunktion die vorhergesagten Labels für die ersten Daten und den ersten Wert der Verlustfunktion umfassen;
Mittel zum Senden der vorhergesagten Labels für die zweiten Daten an die Netzwerkfunktion, wobei die Informationen zur Bestimmung des zweiten Wertes der Verlustfunktion die vorhergesagten Labels für die ersten Daten und den zweiten Wert der Verlustfunktion umfassen.

4. Vorrichtung nach einem der vorhergehenden Ansprüche, wobei der Datensatz in einer ersten Matrix gespeichert ist, und wobei die Vorrichtung umfasst:

Mittel zum Vertauschen, unter Verwendung einer zweiten Matrix, von Spalten der ersten Matrix, um eine dritte Matrix bereitzustellen;
Mittel zum Speichern der zweiten Matrix;
wobei die Darstellung des Datensatzes die dritte Matrix umfasst.

5. Vorrichtung nach Anspruch 4, wobei die Informationen zur Bestimmung des zweiten Wertes der Verlustfunktion apparatus eine vierte Matrix umfassen, und wobei die Vorrichtung umfasst:
Mittel zur Verwendung der dritten Matrix, um die Spalten der vierten Matrix so zu vertauschen, dass sie einer Reihenfolge der Spalten der ersten Matrix entsprechen.

6. Vorrichtung nach einem der vorhergehenden Ansprüche, wobei die Vorrichtung umfasst:
Mittel zum Senden einer Anweisung an die Netzwerkfunktion zur Erhöhung des Datenschutzniveaus eines Differential-Privacy-Mechanismus für die ersten Daten, wenn festgestellt wird, dass ein Differential-Privacy-Mechanismus nicht auf die ersten Daten angewendet wurde.

7. Vorrichtung nach einem der vorhergehenden Ansprüche, wobei der erste Datensatz und/oder der zweite Datensatz mindestens eines der folgenden Elemente umfasst:

Temperaturmessungen von mindestens einem Benutzergerät während eines ersten Zeitraums;
Standortdaten für mindestens ein Benutzergerät während eines zweiten Zeitraums.

8. Vorrichtung nach einem der vorhergehenden Ansprüche, wobei die Vorrichtung eine 5G-Kernnetzfunktion umfasst.

9. Vorrichtung nach einem der vorhergehenden Ansprüche, wobei die Netzwerkfunktion eine Netzwerkdaten- und Analysefunktion, NWDAF, umfasst.

10. Ein Verfahren, umfassend:

Speichern (500) eines Datensatzes, der erste Daten und zweite Daten für mindestens ein Benutzergerät umfasst, wobei die ersten Daten einer Netzwerkfunktion bereitgestellt wurden und die zweiten Daten der Netzwerkfunktion während eines Trainings eines maschinellen Lernmodells nicht bereitgestellt wurden, und wobei die Netzwerkfunktion das maschinelle Lernmodell auf der Grundlage der ersten Daten trainiert;
Speichern (502) von Ground-Truth-Labels für die ersten Daten und die zweiten Daten;
Senden (504) einer Darstellung des Datensatzes an die Netzwerkfunktion;
Empfangen (506) von der Netzwerkfunktion von Informationen zur Bestimmung eines ersten Wertes einer Verlustfunktion, wobei der erste Wert der Verlustfunktion eine Differenz zwischen den Ground-Truth-Labels der ersten Daten und mindestens einem vorhergesagten Ground-Truth-Label der ersten Daten anzeigt, das von der Netzwerkfunktion unter Verwendung des maschinellen Lernmodells bestimmt wird;

Empfangen (508) von der Netzwerkfunktion von Informationen zur Bestimmung eines zweiten Wertes der Verlustfunktion, wobei der zweite Wert der Verlustfunktion eine Differenz zwischen den Ground-Truth-Labels der zweiten Daten und mindestens einem vorhergesagten Ground-Truth-Label der zweiten Daten anzeigt, das von der Netzwerkfunktion unter Verwendung des maschinellen Lernmodells bestimmt wird;

Bestimmen (510) einer Differenz zwischen dem ersten Wert der Verlustfunktion und dem zweiten Wert der Verlustfunktion; und

Vergleichen (512) der Differenz mit einem Schwellenwert, um zu bestimmen, ob ein Differential-Privacy-Mechanismus auf die ersten Daten angewendet wurde, bevor die Netzwerkfunktion das maschinelle Lernmodell auf der Grundlage der ersten Daten trainiert hat.

11. Verfahren nach Anspruch 10, wobei die Informationen zur Bestimmung des ersten Wertes der Verlustfunktion die vorhergesagten Labels für die ersten Daten the vorhergesagten Labels für die zweiten Daten umfassen, und wobei das Verfahren umfasst:

Bestimmen des ersten Wertes der Verlustfunktion auf der Grundlage der vorhergesagten Labels für die ersten Daten und der Ground-Truth-Labels für die ersten Daten;

Bestimmen des ersten Wertes der Verlustfunktion auf der Grundlage der vorhergesagten Labels für die zweiten Daten und der Ground-Truth-Labels für die zweiten Daten.

12. Verfahren nach Anspruch 10, wobei das Verfahren umfasst:

Senden der vorhergesagten Labels für die ersten Daten an die Netzwerkfunktion, wobei die Informationen zur Bestimmung des ersten Wertes der Verlustfunktion die vorhergesagten Labels für die ersten Daten und den ersten Wert der Verlustfunktion umfassen;

Senden der vorhergesagten Labels für die zweiten Daten an die Netzwerkfunktion, wobei die Informationen zur Bestimmung des zweiten Wertes der Verlustfunktion die vorhergesagten Labels für die ersten Daten und den zweiten Wert der Verlustfunktion umfassen.

13. Verfahren nach einem der Ansprüche 10 bis 12, wobei der Datensatz in einer ersten Matrix gespeichert ist, und wobei das Verfahren umfasst:

Vertauschen, unter Verwendung einer zweiten Matrix, von Spalten der ersten Matrix, um eine dritte Matrix bereitzustellen;

Speichern der zweiten Matrix;

wobei die Darstellung des Datensatzes die dritte Matrix umfasst.

14. Verfahren nach Anspruch 13, wobei die Informationen zur Bestimmung des zweiten Wertes der Verlustfunktion apparatus eine vierte Matrix umfassen, und wobei das Verfahren umfasst: Verwenden der dritten Matrix, um die Spalten der vierten Matrix so zu vertauschen, dass sie einer Reihenfolge der Spalten der ersten Matrix entsprechen.

15. Ein Computerprogramm, das darauf gespeicherte Anweisungen zur Durchführung mindestens der folgenden Operationen umfasst:

Speichern (500) eines Datensatzes, der erste Daten und zweite Daten für mindestens ein Benutzergerät umfasst, wobei die ersten Daten einer Netzwerkfunktion bereitgestellt wurden und die zweiten Daten der Netzwerkfunktion nicht bereitgestellt wurden, und wobei die Netzwerkfunktion ein maschinelles Lernmodell auf der Grundlage der ersten Daten trainiert;

Speichern (502) von Ground-Truth-Labels für die ersten Daten und die zweiten Daten;

Senden (504) einer Darstellung des Datensatzes an die Netzwerkfunktion;

Empfangen (506) von der Netzwerkfunktion von Informationen zur Bestimmung eines ersten Wertes einer Verlustfunktion, wobei der erste Wert der Verlustfunktion eine Differenz zwischen den Ground-Truth-Labels der ersten Daten und mindestens einem vorhergesagten Ground-Truth-Label der ersten Daten anzeigt, das von der Netzwerkfunktion unter Verwendung des maschinellen Lernmodells bestimmt wird;

Empfangen (508) von der Netzwerkfunktion von Informationen zur Bestimmung eines zweiten Wertes der Verlustfunktion, wobei der zweite Wert der Verlustfunktion eine Differenz zwischen den Ground-Truth-Labels der zweiten Daten und mindestens einem vorhergesagten Ground-Truth-Label der zweiten Daten anzeigt, das von der Netzwerkfunktion unter Verwendung des maschinellen Lernmodells bestimmt wird;

Bestimmen (510) einer Differenz zwischen dem ersten Wert der Verlustfunktion und dem zweiten Wert der Verlustfunktion; und

Vergleichen (512) der Differenz mit einem Schwellenwert, um zu bestimmen, ob ein Differential-Privacy-Mechanismus auf die ersten Daten angewendet wurde, bevor die Netzwerkfunktion das maschinelle Lernmodell auf der Grundlage der ersten Daten trainiert hat.

**Revendications**

1. Un appareil comprenant :

   des moyens de stockage (500) d'un ensemble de données comprenant des premières données et des deuxièmes données pour au moins un équipement utilisateur, dans lequel les premières données ont été fournies à une fonction réseau et les deuxièmes données n'ont pas été fournies à la fonction réseau lors d'un entraînement d'un modèle d'apprentissage automatique, et dans lequel la fonction réseau entraîne le modèle d'apprentissage automatique sur la base des premières données ;
   des moyens de stockage (502) d'étiquettes de vérité terrain pour les premières données et les deuxièmes données ;
   des moyens d'envoi (504) d'une représentation de l'ensemble de données à la fonction réseau ;
   des moyens de réception (506), en provenance de la fonction réseau, d'informations pour déterminer une première valeur d'une fonction de perte, la première valeur de la fonction de perte indiquant une différence entre les étiquettes de vérité terrain des premières données et au moins une étiquette de vérité terrain prédite des premières données déterminée par la fonction réseau à l'aide du modèle d'apprentissage automatique ;
   des moyens de réception (508), en provenance de la fonction réseau, d'informations pour déterminer une deuxième valeur de la fonction de perte, la deuxième valeur de la fonction de perte indiquant une différence entre les étiquettes de vérité terrain des deuxièmes données et au moins une étiquette de vérité terrain prédite des deuxièmes données déterminée par la fonction réseau à l'aide du modèle d'apprentissage automatique ;
   des moyens de détermination (510) d'une différence entre la première valeur de la fonction de perte et la deuxième valeur de la fonction de perte ;
   des moyens de comparaison (512) de la différence à un seuil pour déterminer si un mécanisme de confidentialité différentielle a été appliqué aux premières données avant que la fonction réseau n'entraîne le modèle d'apprentissage automatique sur la base des premières données.

2. L'appareil selon la revendication 1, dans lequel les informations pour déterminer la première valeur de la fonction de perte comprennent les étiquettes prédites pour les premières données et les étiquettes prédites pour les deuxièmes données, et dans lequel l'appareil comprend :

   des moyens de détermination de la première valeur de la fonction de perte sur la base des étiquettes prédites pour les premières données et des étiquettes de vérité terrain pour les premières données ;
   des moyens de détermination de la première valeur de la fonction de perte sur la base des étiquettes prédites pour les deuxièmes données et des étiquettes de vérité terrain pour les deuxièmes données.

3. L'appareil selon la revendication 1, dans lequel l'appareil comprend :

   des moyens d'envoi des étiquettes prédites pour les premières données à la fonction réseau, dans lequel les informations pour déterminer la première valeur de la fonction de perte comprennent les étiquettes prédites pour les premières données et la première valeur de la fonction de perte ;
   des moyens d'envoi des étiquettes prédites pour les deuxièmes données à la fonction réseau, dans lequel les informations pour déterminer la deuxième valeur de la fonction de perte comprennent les étiquettes prédites pour les premières données et la deuxième valeur de la fonction de perte.

4. Un appareil selon l'une quelconque des revendications précédentes, dans lequel l'ensemble de données est stocké dans une première matrice, et dans lequel l'appareil comprend :

   des moyens de permutation, à l'aide d'une deuxième matrice, de colonnes de la première matrice pour fournir une troisième matrice ;
   des moyens de stockage de la deuxième matrice ;
   dans lequel la représentation de l'ensemble de données comprend la troisième matrice.

**5.** Un appareil selon la revendication 4, dans lequel les informations pour déterminer la deuxième valeur de la fonction de perte apparatus comprennent une quatrième matrice, et dans lequel l'appareil comprend :
des moyens d'utilisation de la troisième matrice pour permuter les colonnes de la quatrième matrice afin de correspondre à un ordre des colonnes de la première matrice.

**6.** Un appareil selon l'une quelconque des revendications précédentes, dans lequel l'appareil comprend :
des moyens d'envoi d'une instruction à la fonction réseau pour augmenter le niveau de confidentialité d'un mécanisme de confidentialité différentielle pour les premières données lorsqu'il est déterminé qu'un mécanisme de confidentialité différentielle n'a pas été appliqué aux premières données.

**7.** Un appareil selon l'une quelconque des revendications précédentes, dans lequel le premier ensemble de données et/ou le deuxième ensemble de données comprend au moins l'un des éléments suivants :

des mesures de température d'au moins un équipement utilisateur pendant une première période de temps ;
des données de localisation d'au moins un équipement utilisateur pendant une deuxième période de temps.

**8.** Un appareil selon l'une quelconque des revendications précédentes, dans lequel l'appareil comprend une fonction réseau cœur 5G.

**9.** Un appareil selon l'une quelconque des revendications précédentes, dans lequel la fonction réseau comprend une fonction de données et d'analyse réseau, NWDAF.

**10.** Un procédé comprenant :

le stockage (500) d'un ensemble de données comprenant des premières données et des deuxièmes données pour au moins un équipement utilisateur, dans lequel les premières données ont été fournies à une fonction réseau et les deuxièmes données n'ont pas été fournies à la fonction réseau lors d'un entraînement d'un modèle d'apprentissage automatique, et dans lequel la fonction réseau entraîne le modèle d'apprentissage automatique sur la base des premières données ;
le stockage (502) d'étiquettes de vérité terrain pour les premières données et les deuxièmes données ;
l'envoi (504) d'une représentation de l'ensemble de données à la fonction réseau ;
la réception (506), en provenance de la fonction réseau, d'informations pour déterminer une première valeur d'une fonction de perte, la première valeur de la fonction de perte indiquant une différence entre les étiquettes de vérité terrain des premières données et au moins une étiquette de vérité terrain prédite des premières données déterminée par la fonction réseau à l'aide du modèle d'apprentissage automatique ;
la réception (508), en provenance de la fonction réseau, d'informations pour déterminer une deuxième valeur de la fonction de perte, la deuxième valeur de la fonction de perte indiquant une différence entre les étiquettes de vérité terrain des deuxièmes données et au moins une étiquette de vérité terrain prédite des deuxièmes données déterminée par la fonction réseau à l'aide du modèle d'apprentissage automatique ;
la détermination (510) d'une différence entre la première valeur de la fonction de perte et la deuxième valeur de la fonction de perte ; et
la comparaison (512) de la différence à un seuil pour déterminer si un mécanisme de confidentialité différentielle a été appliqué aux premières données avant que la fonction réseau n'entraîne le modèle d'apprentissage automatique sur la base des premières données.

**11.** Le procédé selon la revendication 10, dans lequel les informations pour déterminer la première valeur de la fonction de perte comprennent les étiquettes prédites pour les premières données the étiquettes prédites pour les deuxièmes données, et dans lequel le procédé comprend :

la détermination de la première valeur de la fonction de perte sur la base des étiquettes prédites pour les premières données et des étiquettes de vérité terrain pour les premières données ;
la détermination de la première valeur de la fonction de perte sur la base des étiquettes prédites pour les deuxièmes données et des étiquettes de vérité terrain pour les deuxièmes données.

**12.** Le procédé selon la revendication 10, dans lequel le procédé comprend :

l'envoi des étiquettes prédites pour les premières données à la fonction réseau, dans lequel les informations pour déterminer la première valeur de la fonction de perte comprennent les étiquettes prédites pour les premières données et la première valeur de la fonction de perte ;

l'envoi des étiquettes prédites pour les deuxièmes données à la fonction réseau, dans lequel les informations pour déterminer la deuxième valeur de la fonction de perte comprennent les étiquettes prédites pour les premières données et la deuxième valeur de la fonction de perte.

13. Le procédé selon l'une quelconque des revendications 10 à 12, dans lequel l'ensemble de données est stocké dans une première matrice, et dans lequel le procédé comprend :

la permutation, à l'aide d'une deuxième matrice, de colonnes de la première matrice pour fournir une troisième matrice ;

le stockage de la deuxième matrice ;

dans lequel la représentation de l'ensemble de données comprend la troisième matrice.

14. Le procédé selon la revendication 13, dans lequel les informations pour déterminer la deuxième valeur de la fonction de perte apparatus comprennent une quatrième matrice, et dans lequel le procédé comprend :

l'utilisation de la troisième matrice pour permuter les colonnes de la quatrième matrice afin de correspondre à un ordre des colonnes de la première matrice.

15. Un programme informatique comprenant des instructions stockées sur celui-ci pour effectuer au moins les opérations suivantes :

le stockage (500) d'un ensemble de données comprenant des premières données et des deuxièmes données pour au moins un équipement utilisateur, dans lequel les premières données ont été fournies à une fonction réseau et les deuxièmes données n'ont pas été fournies à la fonction réseau, et dans lequel la fonction réseau entraîne un modèle d'apprentissage automatique sur la base des premières données ;

le stockage (502) d'étiquettes de vérité terrain pour les premières données et les deuxièmes données ;

l'envoi (504) d'une représentation de l'ensemble de données à la fonction réseau ;

la réception (506), en provenance de la fonction réseau, d'informations pour déterminer une première valeur d'une fonction de perte, la première valeur de la fonction de perte indiquant une différence entre les étiquettes de vérité terrain des premières données et au moins une étiquette de vérité terrain prédite des premières données déterminée par la fonction réseau à l'aide du modèle d'apprentissage automatique ;

la réception (508), en provenance de la fonction réseau, d'informations pour déterminer une deuxième valeur de la fonction de perte, la deuxième valeur de la fonction de perte indiquant une différence entre les étiquettes de vérité terrain des deuxièmes données et au moins une étiquette de vérité terrain prédite des deuxièmes données déterminée par la fonction réseau à l'aide du modèle d'apprentissage automatique ;

la détermination (510) d'une différence entre la première valeur de la fonction de perte et la deuxième valeur de la fonction de perte ; et

la comparaison (512) de la différence à un seuil pour déterminer si un mécanisme de confidentialité différentielle a été appliqué aux premières données avant que la fonction réseau n'entraîne le modèle d'apprentissage automatique sur la base des premières données.

# FIG. 1

## FIG. 2

**200** — AI Model/NN Blackbox Access Only

**202** PANF

**204** — Store Test and Training data from all UEs
$X = [x_s : x_r]^T$

**206** — Shuffle the dataset by P
$X_P = XP$

Share $X_P$

Share $Y_P'$

**208** — Inquiry the NN owner for predictions
$Y_P' = F(X_P)$

**210** — De-shuffle $Y' = Y_P' P^{-1} = [y'_s : y'_r]^T$

**212** — Compute the loss: $L_1 = L(y'_s : y_s)$ and $L_2 = L(y'_r : y_r)$

$L_1 - L_2 > T_{dp}$ — No → DP

Yes

No DP

**214**

## FIG. 3

**PANF**

Store Test and Training data from all UEs
$$X = [x_s : x_r]^T$$

Shuffle the dataset by P
$$X_P = XP \text{ and } Y_P = YP$$

Inquiry the NN owner for loss function:
$$L_P = L(Y_P', Y_P)$$

De-shuffle the loss $L = L_P P^{-1} = [L_1; L_2]^T$

$L_1 - L_2 > T_{dp}$ → DP

No DP

AI Model/NN Blackbox Access Only

Share $X_P$, $Y_P$

Share $L_P = L(Y_P', Y_P)$

300
302
304
306
308
310
314

# FIG. 4

# FIG. 5

500

Storing a dataset comprising first data and second data for at least one User Equipment, wherein the first data has been provided to a network function and the second data has not been provided to the network function, and wherein the network function trains a machine learning model based on the first data

Storing ground truth labels for the first data and the second data

502

Sending information based on the dataset to the network function

504

506

Receiving, from the network function, information for determining a first value of a loss function, the first value of the loss function indicating a difference between the ground truth labels of the first data and at least one predicted ground truth label of the first data determined by the network function using the machine learning model

Receiving, from the network function, information for determining a second value of the loss function, the second value of the loss function indicating a difference between the ground truth labels of the second data and at least one predicted ground truth label of the second data determined by the network function using the machine learning model

508

Determining a difference between the first value of the loss function and the second value of the loss function

510

Comparing the difference to a threshold to determine whether a Differential Privacy mechanism was applied to the first data before the network function trained the machine learning model based on the first data

512

## FIG. 6

600
614
613
612
611b
615
611a

## FIG. 7

707
706
700
705
703
708
701
702a
704
702
702b

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022108213 A

**Non-patent literature cited in the description**

- Calibrating noise to sensitivity in private data analysis. **DWORK, C.** ; **MCSHERRY, F.** ; **NISSIM, K.** ; **SMITH, A.** Theory of Cryptography: Third Theory of Cryptography Conference. TCC, 2006
- Proceedings. Springer, vol. 3, 265-284
- **HE, K.** ; **ZHANG, X.** ; **REN, S.** ; **SUN, J.** Deep residual learning for image recognition. *Proceedings of the IEEE conference on computer vision and pattern recognition*, 2016, 770-778
- **DENG, J.** ; **DONG, W.** ; **SOCHER, R.** ; **LI, L. J.** ; **LI, K.** ; **FEI-FEI, L.** Imagenet: A large-scale hierarchical image database. *2009 IEEE conference on computer vision and pattern recognition*, June 2009, 248-255